# EUROPÄISCHE PATENTANMELDUNG

(11) **EP 2 014 538 A2**
(43) Veröffentlichungstag der Anmeldung: **14.01.2009**
(21) Anmeldenummer: 08103219.5
(22) Anmeldetag: 31.03.2008
(51) Int. Cl.: B62D 5/087

(54) **Schieberventil für eine hydraulische Servolenkung**

(30) Priorität: 18.06.2007 DE 102007028529
(71) Anmelder: Tedrive Holding B.V., 6411 NK Heerlen (NL)
(72) Erfinder: Gröll, Stephan, 53347, Alfter (DE); Kogan, Alexander, 51105, Köln (DE)
(74) Vertreter: Kayser, Martin

(57) **Zusammenfassung**

Die Erfindung betrifft ein Schieberventil (20) für eine hydraulische Servolenkung von Kraftfahrzeugen mit einer röhrenförmigen Steuerhülse (24). Sie ist mit einer Ausgangswelle (28) verbunden und in ihrer Innenfläche (34) weist sie erste Steuernuten (32) auf. Weiterhin ist eine röhrenförmige Schieberhülse (26) vorgesehen, die zumindest bereichsweise innerhalb der Steuerhülse (24) angeordnet ist. Auf ihrer Außenfläche (38) weist sie zweite Steuernuten (36) auf, die mit den ersten Steuernuten (32) der Steuerhülse (24) in Deckung bringbar sind, wobei die ersten Steuernuten (32) im Wesentlichen in Umfangsrichtung der röhrenförmigen Steuerhülse (24) und die zweiten Steuernuten (36) im Wesentlichen in Umfangsrichtung der röhrenförmigen Schieberhülse (26) angeordnet sind und wobei die relative Position der Steuerhülse (24) und der Schieberhülse (26) zueinander in axialer Richtung veränderbar ist.

## Beschreibung

Die vorliegende Erfindung betrifft ein Schieberventil für eine hydraulische Servolenkung eines Kraftfahrzeugs, mit einer röhrenförmigen Steuerhülse, die mit einer Ausgangswelle verbunden ist und in ihrer Innenfläche erste Steuernuten aufweist.

Schieberventile, insbesondere Drehschieberventile sind bekannt und werden standardmäßig in hydraulischen Servolenkungen eingesetzt. Diese regeln den Hydraulikdruck und damit die Lenkunterstützung auf einem Unterstützungszylinder abhängig vom anliegenden Lenkmoment des Fahrers. Es kommen meist Drehschieberventile zum Einsatz, bei denen sich eine Eingangswelle, die über eine Lenksäule mit einem Lenkrad verbunden ist, relativ zu einer Steuerhülse verdrehen, die mit der Ausgangswelle und bei Zahnstangenlenkungen mit einem Lenkritzel verbunden ist. Durch ein Torsionssystem zwischen Eingangswelle und Steuerhülse wird ein drehmomentabhängiger Verdrehwinkel des Ventils und damit eine drehmomentabhängige Ventilcharakteristik realisiert. Die Verdrehung der Eingangswelle dient also der Festlegung der für die Lenkung benötigten Hilfskraft.

Drehschieberventile für Hilfskraftlenkungen enthalten normalerweise zwei Ventilelemente, die koaxial ineinander beweglich angeordnet und zum Erzielen eines Steuerweges begrenzt zueinander verdrehbar angeordnet sind. Die Eingangswelle kann demnach mit einem ersten Ventilelement verbunden sein, das als radial innenliegender Drehschieber ausgebildet ist. Die Steuerhülse umgibt dieses erste Ventilelement, sie ist radial außenliegend angeordnet. Beide Ventilelemente weisen axial verlaufende Steuernuten auf, die zur Steuerung eines Druckmittels von oder zu Arbeitsräumen eines hydraulischen Stellaggregats bzw. Servomotors dienen. Die Steuernuten können aber auch unmittelbar auf der Eingangswelle angeordnet sein.

Derartige Drehschieber werden beispielsweise in der DE 10 2004 034 026 A1, der DE 692 08 261 T2 und der DE 197 55 633 A1 beschrieben.

Für die einwandfreie Funktion des Drehschieberventils ist eine präzise Fertigung der Steuerkanten und der Steuernuten unabdingbar. Durch entsprechende Gestaltung der Steuerkanten kann der Öffnungsquerschnitt des Drehschieberventils in Abhängigkeit des Drehwinkels zwischen den Ventilelementen vorgegeben werden. Zur Herstellung der Steuerkanten sind deswegen aufwendige und kostenintensive Fertigungsverfahren notwendig. Gerade das Fertigen der insbesondere auch in den genannten Druckschriften beschriebenen in axialer Richtung Aktenzeichen: V207-0051 verlaufenden Steuernuten ist mit erheblichem Aufwand verbunden. Insbesondere die innenliegenden Längsnuten der Steuerhülse stellen erhöhte Anforderung an den Fertigungsprozess. Die Steuernuten werden beispielsweise durch Schaben und Fräsen hergestellt, während die entspreche Steuerkantengeometrie durch Prägen und Schleifen geschaffen wird.

Ein weiterer Nachteil bekannter Drehschieberventile besteht darin, dass mit ihnen bestimmte Funktionalitäten, die elektrisch unterstütze Servolenkungen aufweisen, mit hydraulisch unterstützten Servolenkungen nicht umsetzbar sind. Dies gilt beispielsweise für Funktionen, bei denen das Lenkmoment nicht vom Fahrer, sondern von einem elektrischen Motor aufgebracht wird. Eine solche Funktionalität ist beispielsweise für eine Realisierung von Einparkhilfen, bei denen das Fahrzeug automatisch und ohne Aufbringen von Lenkmoment durch den Fahrer eingeparkt wird, notwendig. Das Aufbringen von Lenkmoment ist bei einem hydraulisch unterstützten System mit den beschriebenen Drehschiebern kaum oder nur mit erheblichem Aufwand möglich.

Die Aufgabe der vorliegenden Erfindung besteht darin, ein Schieberventil zu schaffen, mit dem die Nachteile aus dem Stand der Technik überwunden werden können. Insbesondere soll das Schieberventil kostengünstig herstellbar sein und gegenüber den bekannten Drehschieberventilen weitere Funktionalitäten, wie beispielsweise das Aufbringen eines Lenkmoments durch einen Hilfsmotor, ermöglichen.

Erfindungsgemäß wird die Aufgabe durch ein Schieberventil für eine hydraulische Servolenkung von Kraftfahrzeugen mit einer röhrenförmigen Steuerhülse, die mit einer Ausgangswelle verbunden ist und in ihrer Innenfläche erste Steuernuten aufweist, gelöst, bei dem eine röhrenförmige Schieberhülse vorgesehen ist, die
- zumindest bereichsweise innerhalb der Steuerhülse angeordnet ist,
- auf ihrer Außenfläche zweite Steuernuten aufweist, die mit den ersten Steuernuten der Steuerhülse in Deckung bringbar sind,
wobei die ersten Steuernuten in Umfangsrichtung der röhrenförmigen Steuerhülse und die zweiten Steuernuten in Umfangsrichtung der röhrenförmigen Schieberhülse angeordnet sind und die relative Position der Steuerhülse und der Schieberhülse zueinander in axialer Richtung entlang einer Längsachse veränderbar ist.

Erfindungsgemäß ist also vorgesehen, die Steuernuten nicht in Längsrichtung, sondern in Umfangsrichtung der Steuer- und Schieberhülse bzw. der Eingangs- und Ausgangswelle anzuordnen. Dies hat den wesentlichen Vorteil, dass die Fertigung sämtlicher Steuernuten in einem kostengünstigen Drehprozess möglich ist.

Die Steuernuten können in Deckung bzw. außer Deckung gebracht werden können, da die Position der Steuer- und der Schieberhülse zueinander in axialer Richtung veränderbar ist. Dies kann durch verschiedene geeignete Anordnungen ermöglicht werden, wobei im Folgenden nur beispielhaft eine praktikable und kostengünstig herstellbare Ausführungsform beschrieben wird.

Bei der bevorzugten Ausführungsform ist die Steuerhülse in axialer Richtung fest mit einer Ausgangswelle verbunden, also nicht verschiebbar. Die Schieberhülse dagegen kann sich relativ zur Eingangswelle und damit auch relativ zur Steuerhülse verschieben, wodurch die Steuernuten in die gewünschte Position zueinander gebracht werden können. Um dies zu gewährleisten, weist die Schieberhülse eine Schrägnut mit einem Steigungswinkel α bezogen auf eine Längsachse des Schieberventils auf. In diese Schrägnut greift ein Druckelement ein, das fest mit der Eingangswelle verbunden ist und beispielsweise als Zapfen ausgeführt ist.

Wird nun die Eingangswelle tordiert, übt das Druckelement über die Schrägnut eine Kraft auf die Schieberhülse aus, wodurch diese in axialer Richtung verschoben wird.

Um eine exakte Bewegung der Schieberhülse zu gewährleisten, kann die Schieberhülse eine weitere Nut, die in axialer Richtung verläuft, aufweisen, in die ein Führungselement der Steuerhülse, beispielsweise ein Zapfen, hineinragt. Die Schieberhülse wird dadurch sicher und ausgesprochen exakt zur Steuerhülse geführt.

Das erfindungsgemäße Schieberventil eignet sich ausgesprochen gut für ein Aufbringen von Lenkmoment unmittelbar auf den Lenkungsstrang ohne Nutzung des Lenkrads. Es ist lediglich notwendig, die Steuerhülse und die Schieberhülse relativ zueinander zu verschieben. Mit konstruktiv relativ einfachen Mitteln kann ein Verstellmotor an dem Druckelement, das in die Schrägnut hineinragt, angreifen und das Druckelement verschieben. Das Schieberventil ermöglicht also eine Funktionalität, die üblicherweise mit hydraulischen Servolenkungen kaum erreichbar ist. Eine Realisierung einer so genannten Einparkhilfe ist problemlos möglich.

Anhand der nachfolgenden Figurenbeschreibung wird die Erfindung näher erläutert, wobei nochmals darauf hingewiesen wird, dass es sich dabei lediglich um eine vorteilhafte Ausführungsvariante handelt. Es zeigen:
- Fig. 1: ein: erfindungsgemäßes Schieberventil in Längsschnitt
- Fig. 2:: eine perspektivische Seitenansicht einer erfindungsgemäßen Schieberhülse auf einer Eingangswelle,
- Fig. 3:: ein Bereich einer Steuerhülse auf der Schieberhülse, beides auf einer Eingangswelle,
- Fig. 4:: eine Ausschnittvergrößerung aus Figur 1 zur Verdeutlichung von Steuernuten und Steuerkanten.

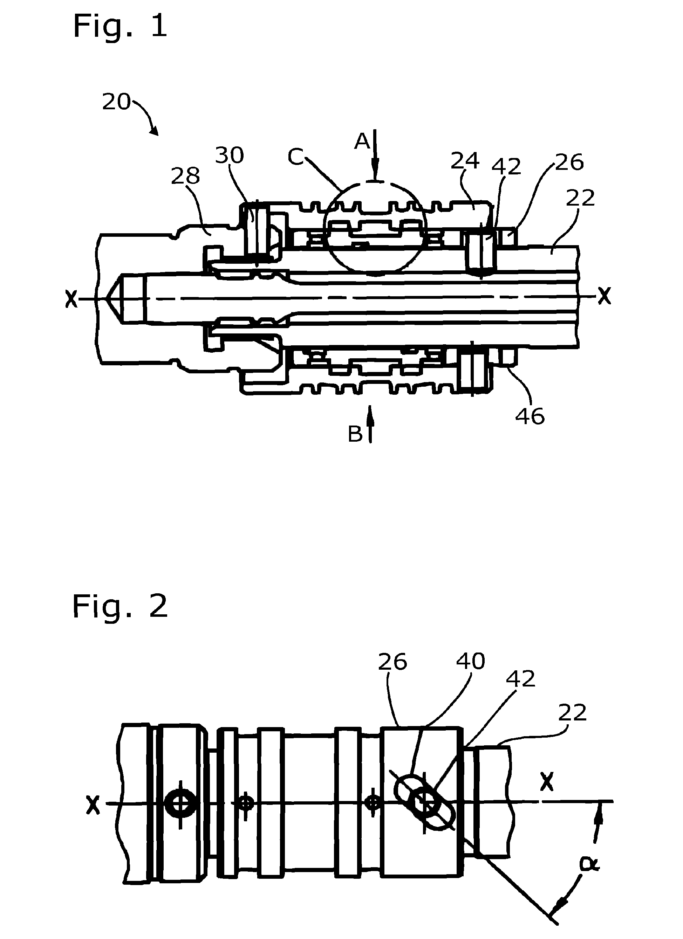

Figur 1 zeigt ein erfindungsgemäßes Schieberventil 20, das zwischen einer Eingangswelle 22 und einer Steuerhülse 24 eine zusätzliche Schieberhülse 26 aufweist. Die Steuerhülse 24 und die Schieberhülse 26 sind röhrenförmig ausgeführt, wobei sich die Schieberhülse 26 im Wesentlichen innerhalb der Steuerhülse 24 befindet. Die Eingangswelle 22 ist über eine nicht gezeigte Längssäule mit einem Lenkrad verbunden, die Steuerhülse 24 ist dagegen drehfest an einer Ausgangswelle 28 befestigt. Die Ausgangswelle 28 ist wiederum mittelbar mit zu drehenden Rädern verbunden.

Die Befestigung der Steuerhülse 24 an der Ausgangswelle 28 erfolgt im gezeigten Ausführungsbeispiel über einen Zapfen 30.

Die Schieberhülse 26 ist in axialer Richtung entlang einer Längsachse x-x des Schieberventils 20 bewegbar. Somit können erste Steuernuten 32, die in eine Innenfläche 34 der Steuerhülse 24 eingelassen sind, mit zweiten Steuernuten 36, die in einer Außenfläche 38 der Schieberhülse 26 eingelassen sind, in oder außer Deckung gebracht werden. Befinden sich die Steuernuten 32, 36 in Deckung, fließt eine Hydraulikflüssigkeit durch diese in ein Längskraftunterstützungsmodul (nicht dargestellt).

Um zu gewährleisten, dass ein auf die Eingangswelle 22 aufgebrachtes Drehmoment das Schieberventil 20 regelt, ist dieses über eine Schrägnut 40 und ein in dieses hineinragendes Druckelement 42 mit der Eingangswelle 22 verbunden. Die Schrägnut 40 weist eine Steigungswinkel α auf, der im gezeigten Ausführungsbeispiel etwa 45° beträgt. Der Steigungswinkel α ist jedoch beliebig und insbesondere in Anpassung an die entsprechenden Rahmenbedingungen frei zu wählen, er kann zwischen etwa 10° und etwa 80° liegen. Das Druckelement 42 ist fest mit der Eingangswelle 22 verbunden und treibt das Schieberelement 20 entlang der Längsachse x-x des Schieberventils 20, wenn die Eingangswelle 22 tordiert wird.

Eine Längsnut 44 innerhalb der Schieberhülse 26 gewährleistet, dass die Schieberhülse 26 stets exakt geführt auf der Eingangswelle 22 verschoben wird. Durch die Längsnut 44 erstreckt sich zu diesem Zweck ein Führungselement 46, das fest mit der Steuerhülse 24 verbunden ist.

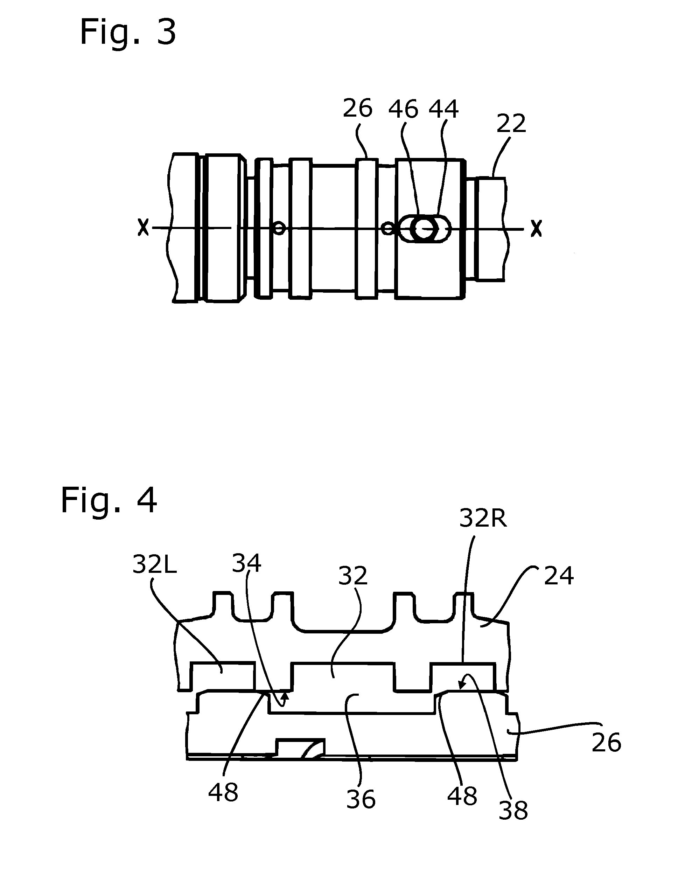

Fig. 4 verdeutlicht nochmals das Zusammenwirken der Steuernuten 32, 36. Die gezeigte linke erste Steuernut 32 ist verschlossen, während sich die rechte erste Steuernut 32 in Deckung mit einer zweiten Steuernut 36 befindet. Weiterhin sind Steuerkanten 48 erkennbar, die ein bestimmtes gewünschtes Lenkunterstützungsverhalten gewährleisten sollen. Dieses Unterstützungsverhalten wird durch die Abschrägung der Steuerkanten 48 erreicht.

Die Erfindung ist nicht auf die gezeigten Ausführungsbeispiele beschränkt, vielmehr sind auch weitere Ausführungsmöglichkeiten denkbar. Insbesondere ist das Schieberventil 20 mit einem nicht dargestellten Lenkmomentantrieb verbindbar, die ein manuelles, sonst durch einen Fahrer aufgebrachtes Drehmoment ersetzt. Eine solche Unterstützung kann beispielsweise an dem Druckelement 42 angreifen, denkbar ist aber auch hier jede andere Verbindung mit insbesondere der Schieberhülse 26. Grundsätzlich ist es auch möglich, dass nicht die Schieberhülse 26 entlang der Längsachse x-x verschoben wird, sondern die Steuerhülse 24 eine entsprechende Bewegung ausführt.

## Patentansprüche

1. Schieberventil (20) für eine hydraulische Servolenkung von Kraftfahrzeugen mit einer röhrenförmigen Steuerhülse (24), die mit einer Ausgangswelle (28) verbunden ist und in ihrer Innenfläche (34) erste Steuernuten (32) aufweist,
**dadurch gekennzeichnet, dass**
- eine röhrenförmige Schieberhülse (26) vorgesehen ist, die
- zumindest bereichsweise innerhalb der Steuerhülse (24) angeordnet ist.
- auf ihrer Außenfläche (38) zweite Steuernuten (36) aufweist, die mit den ersten Steuernuten (32) der Steuerhülse (24) in Deckung bringbar sind,
wobei die ersten Steuernuten (32) im Wesentlichen in Umfangsrichtung der röhrenförmigen Steuerhülse (24) und die zweiten Steuernuten (36) im Wesentlichen in Umfangsrichtung der röhrenförmigen Schieberhülse (26) angeordnet sind und die die relative Position der Steuerhülse (24) und der Schieberhülse (26) zueinander in axialer Richtung entlang einer Längsachse x-x veränderbar ist.

2. Schieberventil (20) nach Anspruch 1, **dadurch gekennzeichnet, dass** die Schieberhülse (26) eine Schrägnut (40) aufweist, in die ein Druckelement (42) hineinragt, dass fest mit der Eingangswelle (22) verbunden ist.

3. Schieberventil (20) nach Anspruch 2, **dadurch gekennzeichnet, dass** das Druckelement (42) als Zapfen ausgeführt ist.

4. Schieberventil (20) nach einem der Ansprüche 1 bis 3, **dadurch gekennzeichnet, dass** die Schieberhülse (26) eine Längsnut (44) aufweist, in die ein Führungselement (46) hineinragt, das fest mit der Steuerhülse (24) verbunden ist.

5. Schieberventil (20) nach einem der Ansprüche 2 bis 4, **dadurch gekennzeichnet, dass** die Schrägnut (40) einen Steigungswinkel (α) von etwa 10° bis 80°, bezogen auf Längsachse x-x, aufweist.

6. Schieberventil (20) nach Anspruch 5, **dadurch gekennzeichnet, dass** der Steigungswinkel (α) 45° beträgt.

7. Schieberventil (20) nach einem der Ansprüche 1 bis 6, **dadurch gekennzeichnet, dass** die Veränderung der relativen Position der Steuerhülse (24) und der Schiebehülse (26) zueinander, anstelle eines von einem Lenkrad ausgehenden Lenkmoments durch einen Lenkmomentantrieb bewirkt wird.

8. Schieberventil (20) nach Anspruch 7, **dadurch gekennzeichnet, dass** ein externer Motor eine Kraft auf das Druckelement (42) aufbringt.
